# EUROPEAN PATENT SPECIFICATION

(11) **EP 4 149 115 B1**
(45) Date of publication and mention of the grant of the patent: **10.09.2025**
(21) Application number: 20943465.3
(22) Date of filing: 24.09.2020
(51) Int. Cl.: H04N 21/234, H04N 21/25, H04N 21/2187, H04N 21/258, H04N 21/262

(54) **VIDEO STREAM PROCESSING METHOD AND APPARATUS, AND COMPUTER DEVICE AND MEDIUM**
VERFAHREN UND VORRICHTUNG ZUR VERARBEITUNG VON VIDEOSTRÖMEN SOWIE COMPUTERVORRICHTUNG UND MEDIUM
PROCÉDÉ ET APPAREIL DE TRAITEMENT DE FLUX VIDÉO, DISPOSITIF INFORMATIQUE ET SUPPORT

(30) Priority: 28.06.2020 CN 202010600691
(43) Date of publication of application: 15.03.2023
(73) Proprietor: BAIDU ONLINE NETWORK TECHNOLOGY (BEIJING) CO., LTD., Beijing 100085 (CN)
(72) Inventor: SHI, Nansheng, Beijing 100085 (CN); XIE, Malin, Beijing 100085 (CN); CAO, Jiao, Beijing 100085 (CN)
(74) Representative: Stöckeler, Ferdinand
(86) International application number: PCT/CN2020/117391
(87) International publication number: WO 2022/000826

(56) References cited:
- CN-A- 104 683 852
- CN-A- 106 407 241
- CN-A- 107 295 361
- CN-A- 109 729 395
- CN-A- 110 099 283
- CN-A- 110 446 056
- CN-A- 110 446 056
- CN-A- 110 677 701
- CN-A- 110 677 701
- CN-A- 110 769 283
- CN-B- 107 295 361
- US-A1- 2015 121 437

## Description

### TECHNICAL FIELD

The present disclosure relates to a field of a cloud platform, and more specifically, to a method and an apparatus of processing a video stream, a computer device, and medium.

### BACKGROUND

With a development of Internet technologies and intelligent mobile terminal devices, various Internet products bring a lot of convenience and interest to people's work and life. In recent years, various live-streaming platforms for live streaming have emerged in an endless stream. Live streaming may bring people more real-time and interesting viewing experience and social experience. In view of diverse needs for living stream, multi-camera and multi-angle live streaming may enrich a live-streaming content and enhance an atmosphere of a live-streaming scene. Generally, for a same live-streaming event, a plurality of video streams may be provided, such as a plurality of video streams captured from different shooting positions, a plurality of video streams captured for different targets in the live-streaming scene, and so on. A director control for the plurality of video streams may directly affect a live-streaming viewing experience of a user.

CN110446056A discloses a video processing method, including: acquiring system setting data of a live program to be live-broadcasted; acquiring user characteristic data; selecting a target live broadcast view angle from at least one candidate view angle according to the system setting data and the user feature data; and sending the video stream of the target live broadcast viewing angle.

CN107295361B discloses a content pushing method, including: receiving the image data sent from an application user terminal, wherein the image data are determined by the application user terminal according to the image and/or the video photographed by an imaging device connected to the application user terminal; performing data treatment on the image data to obtain the attribute label of a user who logs in on the application user terminal; generating a content pushing list according to the attribute label of the user; and delivering the content pushing list to the application user terminal.

CN110677701A discloses a video stream recommendation method, including: determining multiple paths of candidate video streams; determining a user preference degree of each candidate video stream based on the user portrait; and performing video stream recommendation based on the user preference degree of each candidate video stream.

### SUMMARY

In view of this, the present disclosure provides a method and an apparatus of processing a video stream, a computer device, and a medium. The invention is defined by the appended claims

According to an aspect of the present disclosure, a method of processing a video stream is provided, including: acquiring a plurality of video streams for a live-streaming event; determining respective feature information of the plurality of video streams; determining a feature information of a client in response to a video request message from the client; matching the respective feature information of the plurality of video streams with the feature information of the client respectively, so as to obtain respective matching degrees of the plurality of video streams with respect to the client; and selecting one video stream from the plurality of video streams to obtain a selected video stream according to the respective matching degrees of the plurality of video streams with respect to the client, and pushing the selected video stream to the client.

According to embodiments of the present disclosure, the respective feature information of the plurality of video streams include at least a video tag, and the at least one video tag includes a first video tag. The determining respective feature information of the plurality of video streams includes: acquiring a shooting position information of each video stream in the plurality of video streams; and determining a first video tag of each video stream according to the shooting position information.

According to embodiments of the present disclosure, the at least one video tag further includes a second video tag. The determining respective feature information of the plurality of video streams further includes: extracting at least one frame image from each video stream; determining a content information of the video stream according to the at least one frame image; and determining a second video tag of each video stream according to the content information.

According to embodiments of the present disclosure, the method further includes presetting a video tag library including a plurality of candidate video tags. The determining a second video tag of each video stream according to the content information includes: calculating a first similarity between the content information and each candidate video tag in a plurality of candidate video tags; and selecting, according to the first similarity, at least one candidate video tag from the plurality of candidate video tags as the second video tag of the video stream.

According to embodiments of the present disclosure, the determining a feature information of a client includes: receiving a custom configuration information from the client; and determining, according to the custom configuration information, at least one configuration tag of the client as the feature information of the client.

According to embodiments of the present disclosure, the method further includes presetting a video tag library including a plurality of candidate video tags. The determining at least one configuration tag of the client according to the custom configuration information includes: calculating a second similarity between the custom configuration information and each candidate video tag in a plurality of candidate video tags; and selecting, according to the second similarity, at least one candidate video tag from the plurality of candidate video tags as the at least one configuration tag of the client.

According to embodiments of the present disclosure, the determining a feature information of the client includes: acquiring user attribute data and user behavior data of the client; determining a user category for the client according to the user attribute data and the user behavior data; and determining at least one user tag of the client according to the user category.

According to embodiments of the present disclosure, the method further includes presetting a user tag library, and the user tag library includes at least one candidate user tag associated with each user category in a plurality of user categories. The determining at least one user tag of the client according to the user category includes: searching for at least one candidate user tag associated with the user category from the user tag library as the at least one user tag.

According to embodiments of the present disclosure, the method further includes presetting a tag association library, and the tag association library includes an association weight between a video tag in a plurality of video tags and a user tag in a plurality of user tags. The matching the respective feature information of the plurality of video streams with the feature information of the client respectively includes: determining an association weight between each video tag of each video stream and each user tag in at least one user tag of the client according to the tag association library, and determining a comprehensive weight of each video tag according to the association weight; acquiring a preset evaluation for each video tag; and performing a weighted summation on the preset evaluation for the video tag of each video stream by using the comprehensive weight of each video tag respectively, so as to obtain the matching degree of each video stream with respect to the client.

According to embodiments of the present disclosure, the selecting one video stream from the plurality of video streams to obtain a selected video stream according to the respective matching degrees of the plurality of video streams with respect to the client, and pushing the selected video stream to the client includes: pushing, in response to a matching degree in the respective matching degrees of the plurality of video streams with respect to the client being greater than a predetermined threshold value, a video stream having a greatest matching degree in the plurality of video streams to the client.

According to an aspect of the present disclosure, an apparatus of processing a video stream is provided, including an acquisition module, a first determination module, a second determination module, a matching module, and a push module. The acquisition module is used to acquire a plurality of video streams for a live-streaming event. The first determination module is used to determine respective feature information of the plurality of video streams. The second determination module is used to determine a feature information of a client in response to a video request message from the client. The matching module is used to match the respective feature information of the plurality of video streams with the feature information of the client respectively, so as to obtain respective matching degrees of the plurality of video streams with respect to the client. The push module is used to select one video stream from the plurality of video streams to obtain a selected video stream according to the respective matching degrees of the plurality of video streams with respect to the client, and push the selected video stream to the client.

According to embodiments of the present disclosure, the respective feature information of the plurality of video streams include at least a video tag, and the at least one video tag includes a first video tag. The first determination module includes: a first configuration sub-module configured to acquire a shooting position information of each video stream in the plurality of video streams; and determine a first video tag of each video stream according to the shooting position information.

According to embodiments of the present disclosure, the at least one video tag further includes a second video tag. The first determination module further includes: a first analysis sub-module configured to extract at least one frame image from each video stream; determine a content information of the video stream according to the at least one frame image; and determine a second video tag of each video stream according to the content information.

According to embodiments of the present disclosure, the apparatus further includes a presetting module configured to preset a video tag library including a plurality of candidate video tags. The first analysis sub-module includes: a first calculation unit configured to calculate a first similarity between the content information and each candidate video tag in a plurality of candidate video tags; and a first selection unit configured to select, according to the first similarity, at least one candidate video tag from the plurality of candidate video tags as the second video tag of the video stream.

According to embodiments of the present disclosure, the second determination module includes a second configuration sub-module configured to: receive a custom configuration information from the client; and determine, according to the custom configuration information, at least one configuration tag of the client as the feature information of the client.

According to embodiments of the present disclosure, the apparatus further includes a presetting module configured to preset a video tag library including a plurality of candidate video tags. The second configuration sub-module includes: a second calculation unit configured to calculate a second similarity between the custom configuration information and each candidate video tag in a plurality of candidate video tags; and a second selection unit configured to select, according to the second similarity, at least one candidate video tag from the plurality of candidate video tags as the at least one configuration tag of the client.

According to embodiments of the present disclosure, the second determination module includes a second analysis sub-module configured to: acquire user attribute data and user behavior data of the client; determine a user category for the client according to the user attribute data and the user behavior data; and determine at least one user tag of the client according to the user category.

According to embodiments of the present disclosure, the apparatus further includes a presetting module configured to preset a user tag library, and the user tag library includes at least one candidate user tag associated with each user category in a plurality of user categories. The second analysis sub-module includes: a search unit configured to search for at least one candidate user tag associated with the user category from the user tag library as the at least one user tag.

According to embodiments of the present disclosure, the apparatus further includes a presetting module configured to preset a tag association library, and the tag association library includes an association weight between a video tag in a plurality of video tags and a user tag in a plurality of user tags. The matching module includes: a determination sub-module configured to determine an association weight between each video tag of each video stream and each user tag in at least one user tag of the client according to the tag association library, and determine a comprehensive weight of each video tag according to the association weight; an acquisition sub-module configured to acquire a preset evaluation for each video tag; and a matching sub-module configured to perform a weighted summation on the preset evaluation for the video tag of each video stream by using the comprehensive weight of each video tag respectively, so as to obtain the matching degree of each video stream with respect to the client.

According to embodiments of the present disclosure, the push module is further configured to: push, in response to a matching degree in the respective matching degrees of the plurality of video streams with respect to the client being greater than a predetermined threshold value, a video stream having a greatest matching degree in the plurality of video streams to the client.

According to another aspect of the present disclosure, a computer device is provided, including a memory, a processor, and a computer program stored in the memory and executable by the processor, and the process is configured to execute the program to implement the method described above.

According to another aspect of the present disclosure, a computer program containing computer executable instructions is provided, and the instructions are executable to implement the method described above.

According to the method of processing the video stream according to embodiments of the present disclosure, in a case of a plurality of video streams for a same live-streaming event, for each client in a plurality of clients, the respective feature information of the plurality of video streams may be matched with the feature information of the client respectively to determine the respective degrees of adaptation between the plurality of video streams and the client, so that the video stream most suitable for the client may be selected from the plurality of video streams and pushed to the client. According to the solution of embodiments of the present disclosure, a personalized push of video stream for different clients may be achieved, so as to meet different playback requirements of different clients for the same live-streaming event caused by different users, different terminal devices and other differences.

It should be understood that content described in this section is not intended to identify key or important features in embodiments of the present disclosure, nor is it intended to limit the scope of the present disclosure. Other features of the present disclosure will be easily understood through the following description.

### BRIEF DESCRIPTION OF THE DRAWINGS

The above and other objectives, features and advantages of the present disclosure will be more apparent through the following description of embodiments of the present disclosure with reference to the accompanying drawings, in which:
FIG. 1 schematically shows an exemplary system architecture to which a method and an apparatus of processing a video stream may be applied according to embodiments of the present disclosure;
FIG. 2 schematically shows a flowchart of a method of processing a video stream according to embodiments of the present disclosure;
FIG. 3A schematically shows an example schematic diagram of a process of processing a video stream according to embodiments of the present disclosure;
FIG. 3B schematically shows an example schematic diagram of a video tag library according to embodiments of the present disclosure;
FIG. 3C schematically shows an example schematic diagram of a process of processing a video stream according to other embodiments of the present disclosure;
FIG. 4 schematically shows an example flowchart of a method of processing a video stream according to other embodiments of the present disclosure;
FIG. 5 schematically shows an example flowchart of a method of processing a video stream according to other embodiments of the present disclosure;
FIG. 6 schematically shows a block diagram of an apparatus of processing a video stream according to embodiments of the present disclosure; and
FIG. 7 schematically shows a block diagram of a computer device according to embodiments of the present disclosure.

### DETAILED DESCRIPTION OF EMBODIMENTS

Embodiments of the present disclosure will be described below with reference to the accompanying drawings. It should be understood, however, that these descriptions are merely exemplary and are not intended to limit the scope of the present disclosure. In the following detailed description, for ease of interpretation, many specific details are set forth to provide a comprehensive understanding of embodiments of the present disclosure. However, it is clear that one or more embodiments may also be implemented without these specific details. In addition, in the following description, descriptions of well-known structures and technologies are omitted to avoid unnecessarily obscuring the concepts of the present disclosure.

Terms used herein are for the purpose of describing specific embodiments only and are not intended to limit the present disclosure. The terms "including", "containing", etc. used herein indicate the presence of the feature, step, operation and/or component, but do not exclude the presence or addition of one or more other features, steps, operations or components.

All terms used herein (including technical and scientific terms) have the meanings generally understood by those skilled in the art, unless otherwise defined. It should be noted that the terms used herein shall be interpreted to have meanings consistent with the context of this specification, and shall not be interpreted in an idealized or overly rigid manner.

In a case of using the expression similar to "at least one of A, B and C", it should be explained according to the meaning of the expression generally understood by those skilled in the art (for example, "a system including at least one of A, B and C" should include but not be limited to a system including A alone, a system including B alone, a system including C alone, a system including A and B, a system including A and C, a system including B and C, and/or a system including A, B and C). In a case of using the expression similar to "at least one of A, B or C", it should be explained according to the meaning of the expression generally understood by those skilled in the art (for example, "a system including at least one of A, B or C" should include but not be limited to a system including A alone, a system including B alone, a system including C alone, a system including A and B, a system including A and C, a system including B and C, and/or a system including A, B and C).

Embodiments of the present disclosure provide a method and an apparatus of processing a video stream, a computer device, and a medium. The method of processing the video stream may include an acquisition process, a first determination process, a second determination process, a matching process, and a push process. In the acquisition process, a plurality of video streams for a live-streaming event are acquired. In the first determination process, respective feature information of the plurality of video streams is determined. In response to a video request message from a client, the second determination process is performed to determine a feature information of the client. Then, in the matching process, the respective feature information of the plurality of video streams are matched with the feature information of the client respectively, so as to obtain respective matching degrees of the plurality of video streams with respect to the client. According to the respective matching degrees of the plurality of video streams with respect to the client, the push process may be performed to select one video stream from the plurality of video streams and push the selected video stream to the client.

With a development of Internet technologies and intelligent mobile terminal devices, various Internet products bring a lot of convenience and interest to people's work and life. In recent years, various live-streaming platforms for live streaming have emerged in an endless stream. Live streaming may bring people more real-time and interesting viewing experience and social experience. In view of diverse needs for living stream, multi-camera and multi-angle live streaming may enrich a live-streaming content and enhance an atmosphere of a live-streaming scene. Generally, for a same live-streaming event, a plurality of video streams may be provided, such as a plurality of video streams captured from different shooting positions, a plurality of video streams captured for different targets in the live-streaming scene, and so on.

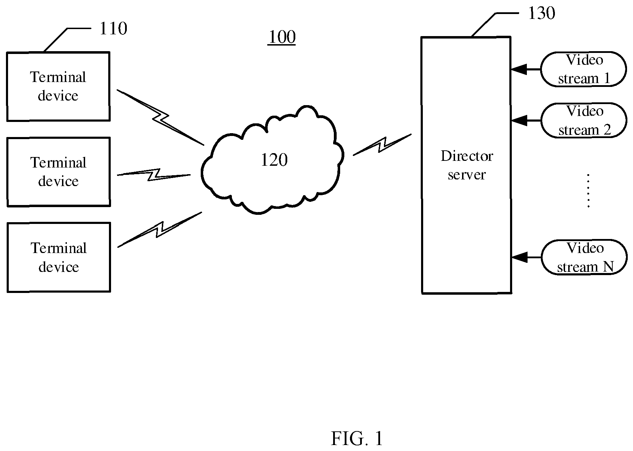

FIG. 1 schematically shows an exemplary system architecture 100 to which a method and an apparatus of processing a video stream may be applied according to embodiments of the present disclosure. It should be noted that FIG. 1 is merely an example of a system architecture to which embodiments of the present disclosure may be applied, so as to help those skilled in the art to understand the technical content of the present disclosure. It does not mean that embodiments of the present disclosure may not be applied to other devices, systems, environments or scenes.

As shown in FIG. 1, a system architecture 100 according to such embodiments may include a plurality of terminal devices 110, a network 120, and a director server 130. The terminal devices 110 may be various terminal devices, such as desktop computers, portable computers, smart phones, tablet computers, or the like, which is not limited here. The terminal device 110 may be installed with a live-streaming client or a live-streaming applet. The director server 130 may be various electronic devices with computing power, which is not limited here. The director server 130 may be used to acquire a plurality of video streams, including video stream 1 to video stream N, for a same live-streaming event, and perform a push control of the video streams for the terminal device 110 according to the plurality of video streams, so that the terminal device 110 may play a live-streaming picture through the live-streaming client or live-streaming applet. In such embodiments, N is an integer greater than 2.

In a processing method, the director server 130 may adopt a unified push control strategy for the plurality of terminal devices 110. For example, from a live-streaming start time, a video stream 3 is pushed to the plurality of terminal devices 110 within a time interval of t=0 to t=5 min. A director switching may be performed at t= 6min, and a video stream 7 may be pushed to the plurality of terminal devices 110 within a time interval from t=6 min to t=15 min. According to this processing method, the director server 130 performs unified push and switch for the plurality of terminal devices 110, so that a same live-streaming picture is played by the plurality of terminal devices 110 at the same time. However, different clients may have different playback requirements for the same live-streaming event due to different users, different terminal devices, or the like. The above processing method may not be implemented to perform a personalized push of video streams for different terminal devices, which may not meet personalized requirements of different clients for live streaming.

According to embodiments of the present disclosure, a method of processing a video stream is provided. The method is exemplified below with reference to figures. It should be noted that a sequence number of each operation in the following methods is merely used to represent the operation for ease of description, and should not be regarded as indicating an execution order of each operation. Unless explicitly stated, the methods do not need to be performed exactly in the order shown.

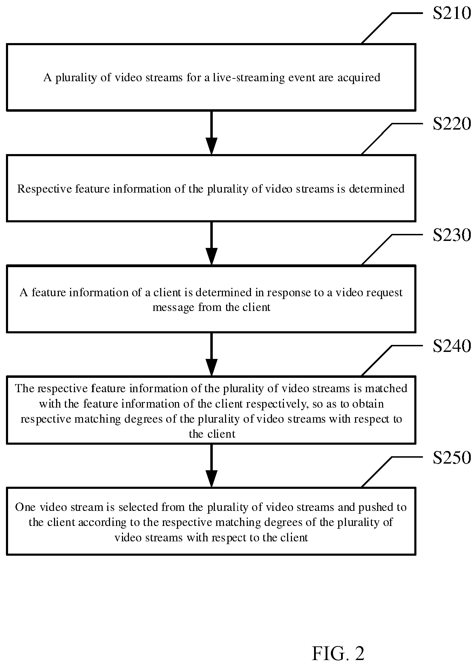

FIG. 2 schematically shows a flowchart of a method of processing a video stream according to embodiments of the present disclosure, and the method of processing the video stream may be performed, for example, on the director server side shown in FIG. 1.

As shown in FIG. 2, the method may include operation S210 to operation S250.

In operation S210, a plurality of video streams for a live-streaming event are acquired.

Exemplarily, in any specific live-streaming event, such as a match live streaming, a game live streaming, a food live streaming, and so on, the plurality of video streams may be captured from different shooting positions for a same target object in the live-streaming event, or from different shooting positions for different target objects in the live-streaming event. For example, the plurality of video streams may include a long-distance captured video stream and a short-distance captured video stream for the same target object. The plurality of video streams may include a video stream captured for a first target object from a first shooting position and a video stream captured for a second target object from a second shooting position, and so on.

In operation S220, respective feature information of the plurality of video streams is determined.

Exemplarily, in operation S220, the feature information of each video stream in one or more dimensions may be acquired by one or more predetermined methods. For example, it is possible to acquire the feature information of each video stream in a physical perspective dimension, for example, panorama, short distance, long distance and other information may be represented by different feature values in the physical perspective dimension. It is also possible to acquire the feature information of each video stream in a target position dimension, for example, face, hand, leg and other information may be represented by different feature values in the target position dimension. It is also possible to acquire the feature information of each video stream in a target content dimension, for example, clothing, food, female, male and other information may be represented by different feature values in the target content dimension. The feature dimension of the feature information of the video stream may be set according to actual needs, and any feature dimension may be divided into a plurality of sub-dimensions to describe the feature information of the video stream in a smaller granularity.

In operation S230, a feature information of a client is determined in response to a video request message from the client.

Exemplarily, the client may be various application clients or lightweight application clients having a live streaming function. Taking an applet as the lightweight application client as an example, a plurality of applets may be integrated into one application to achieve various services. With a popularity of live streaming, a large number of live-streaming applets emerged. The method of processing the video stream according to embodiments of the present disclosure may be applied to an applet live streaming scene. After receiving the video request message from the client, the director server starts to perform a video stream push processing operation for the client. At this time, it is needed to determine the feature information of the client in one or more dimensions. The feature information of the client in one or more dimensions may represent, for example, an attribute information of a user of the client, a behavior feature information of a user of the client, a preference information of a user, an attribute information of a terminal device where the client is located, a configuration information of a terminal device, a performance information of a terminal device, and so on, which may be used for subsequent matching with the feature information of each video stream.

In operation S240, the respective feature information of the plurality of video streams is matched with the feature information of the client respectively, so as to obtain respective matching degrees of the plurality of video streams with respect to the client.

For example, in a case of video stream 1 to video stream N are acquired, when a video request message from client A is received, a feature information of the video stream 1 is matched with a feature information of the client A to obtain a matching degree M (1, A) of the video stream 1 with respect to the client A; a feature information of video stream 2 is matched with the feature information of the client A to obtain a matching degree M (2, A) of the video stream 2 with the client A; and so on, matching degrees {M (1, A), M (2, A),..., M (N, A)} of the plurality of video streams with respect to the client A may be obtained. The matching degree of any video stream with respect to the client A is used to indicate a degree of adaptation between the video stream and the feature information of the client A, and the higher the matching degree, the higher the degree of adaption between the video stream and the client.

In operation S250, one video stream is selected from the plurality of video streams and pushed to the client according to the respective matching degrees of the plurality of video streams with respect to the client.

For example, a predetermined threshold value may be set for the client A. In a case that a matching degree in the respective matching degrees of the plurality of video streams with respect to the client A is greater than the predetermined threshold value, a video stream having a greatest matching degree may be selected from the plurality of video streams as the video stream most suitable for the client A, and that video stream may be pushed to the client A. Alternatively, a video stream having the greatest matching degree may be directly selected from the plurality of video streams as the video stream most suitable for the client A, and that video stream may be pushed to the client A. Similarly, the above operations S230 to S250 may also be performed for each other client to determine the video stream adapted to each client.

It may be understood by those skilled in the art that according to the method of processing the video stream according to embodiments of the present disclosure, in a case of a plurality of video streams for a same live-streaming event, the respective feature information of the plurality of video streams may be matched with the feature information of the client respectively to determine the respective degrees of adaptation between the plurality of video streams and the client, so that the video stream most suitable for the client may be selected from the plurality of video streams and pushed to the client. According to the solution of embodiments of the present disclosure, a personalized video stream push for different clients may be achieved, so as to meet different playback requirements of different clients for the same live-streaming event caused by different users, different terminal devices and other differences.

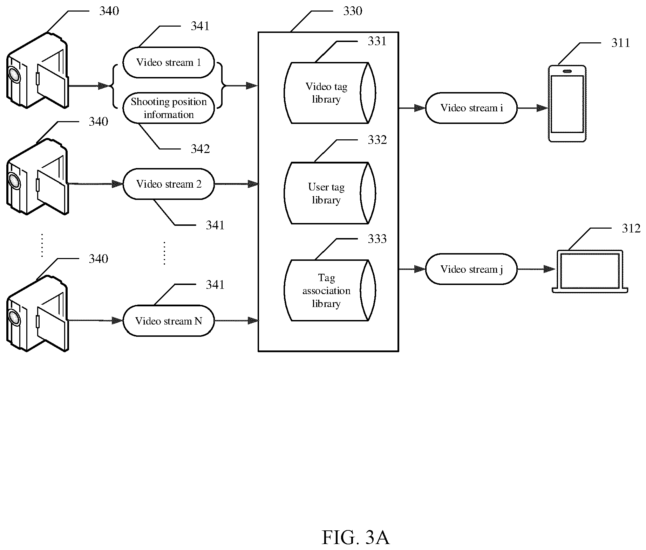

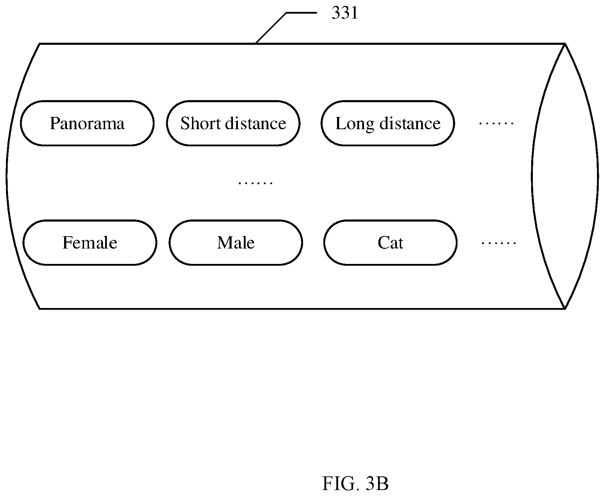

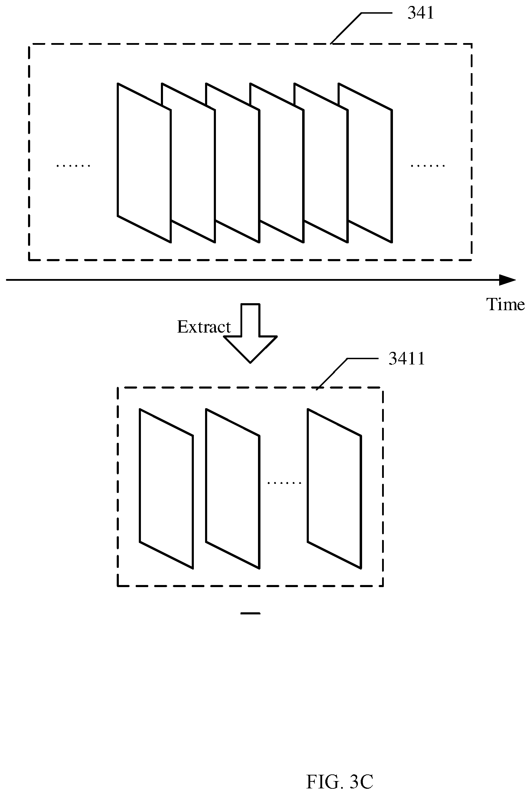

According to embodiments of the present disclosure, each of the respective feature information of the plurality of video streams includes at least one video tag. A process of acquiring a feature information of a video stream will be exemplarily described below with reference to FIG. 3A, FIG. 3B and FIG. 3C.

FIG. 3A schematically shows an example schematic diagram of a process of processing a video stream according to embodiments of the present disclosure, which is used to exemplarily describe embodiments of the above-mentioned operation S220.

As shown in FIG. 3A, a director server 330 receives N video streams 341, including video stream 1 to video stream N, from N camera devices 340, and the N video streams are captured for a same live-streaming event, where N is an integer greater than 2. For each camera device 340 in the N camera devices 340, taking a first camera device 340 as an example, when the video stream 1 captured by the first camera device 340 is uploaded to the director server 330, a shooting position information 342 of the video stream 1 is together uploaded to the director server. According to embodiments of the present disclosure, after acquiring the video stream 1 and the shooting position information 342 of the video stream 1, the director server 330 may determine a first video tag of the video stream 1 based on the shooting position information 342 of the video stream 1. The first video tag is used to represent a physical perspective of the captured video stream 1. The first video tag may be represented in a form of key-value pair. For example, the first video tag of the video stream 1 may be represented as x=101, where "x" is a unique identifier (ID) of the first video tag, and the value "101" indicates that the shooting position information of the video stream 1 is "short distance". Similarly, the above process of determining the first video tag may be performed for each other video stream.

For example, when a data format of the shooting position information 342 uploaded by the camera device 340 conforms to the video tag, the shooting position information 342 may be directly used as the first video tag of the corresponding video stream. When the data format of the shooting position information 342 uploaded by the camera device 340 does not conform to the video tag format, for example, the first video tag may be determined as follows. A video tag library 331 may be preset on the director server side, and the video tag library 331 may include a large number of preset candidate video tags. According to actual needs, the candidate video tags may be set according to various granularities.

FIG. 3B schematically shows an example schematic diagram of a video tag library according to embodiments of the present disclosure. In an example shown in FIG. 3B, the video tag library 331 may include "panorama", "short distance", "long distance", and other candidate video tags. Taking the video stream 1 as an example, a similarity between the shooting position information 342 of the video stream 1 and each candidate video tag in the video tag library 331 may be calculated, and a candidate video tag having a similarity above the first threshold value may be selected as the first video tag of the video stream 1.

According to embodiments shown in FIG. 3A, at least one video tag of each video stream may include a first video tag for representing the shooting position information of the video stream, so that different preferences of clients for viewing angle may be taken into account in the subsequent matching process with the clients. For example, users of some clients prefer a long-distance viewing angle, and users of other clients prefer a short-distance viewing angle. It is possible to select video streams with different first video tags for these clients with different preferences.

FIG. 3C schematically shows an example schematic diagram of a process of processing a video stream according to other embodiments of the present disclosure, which is used to exemplarily describe other embodiments of the above-mentioned operation S220.

As shown in FIG. 3C, taking the video stream 1 as an example, the feature information of that video stream may also be determined as follows. Exemplarily, at least one frame image 3411 may be extracted from the video stream 1, for example, according to a predetermined frequency. Then, a content information 3412 of the video stream 1 may be determined according to the extracted at least one frame image 3411. Next, a second video tag of the video stream 1 may be determined according to the content information 3412 of the video stream 1. The second video tag may be used to represent a shooting content of the video stream 1, such as a position of a photographed target, a content of the photographed target, and so on. The second video tag may be expressed in a form of a key-value pair. Similarly, the above process of determining the second video tag may be performed for each other video stream.

Exemplarily, the second video tag may be determined as follows. After at least one frame of image is extracted from the video stream, for example, the at least one frame image may be detected by using an object detection algorithm (such as Faster R-CNN algorithm), so as to determine a number, a category, a position and other information of a target object contained therein as the content information of the video stream. In the example shown in FIG. 3B, the video tag library 331 may further include "lady", "man", "cat", and other candidate video tags. Taking the video stream 1 as an example, a first similarity between the content information 3412 of the video stream 1 and each candidate video tag in the video tag library 331 may be calculated, and a candidate video tag having a first similarity above a second threshold value may be selected as the second video tag of the video stream 1.

According to embodiments shown in FIG. 3C, at least one video tag of each video stream may include a second video tag for representing the shooting position information of the video stream, so that different preferences of the client for viewing content may be considered in the subsequent matching process with the client. For example, users of some clients prefer to watch female, and users of other clients prefer to watch male. It is possible to select video streams with different second video tags for these clients with different preferences. This process may not only increase the dimension of the video tag, but also calibrate a possible error in determining the video tag according to the shooting position information shown in FIG. 3A.

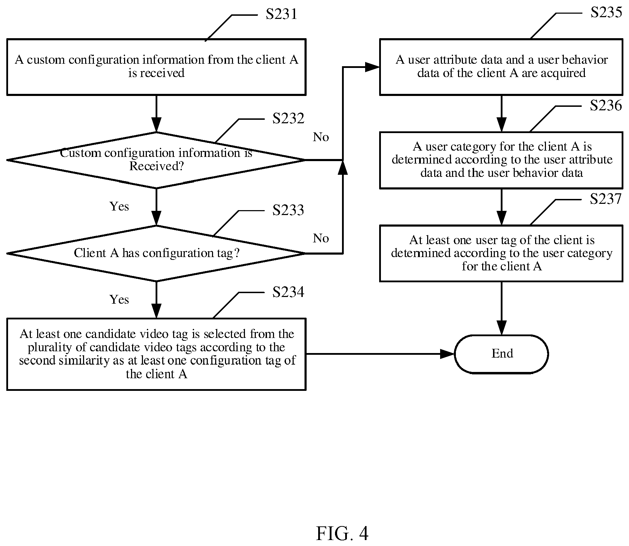

FIG. 4 schematically shows an example flowchart of a method of processing a video stream according to other embodiments of the present disclosure, which is used to exemplarily describe embodiments of operation S230 of determining a feature information of a client.

As shown in FIG. 4, taking client A as an example, a process of determining the feature information of the client A in operation S230 may include operation S231 to operation S237.

In operation S231, a custom configuration information from the client A is received.

Exemplarily, the custom configuration information may be generated based on a selection or input operation of a user. For example, in a live-streaming event, after receiving the video request message from the client A, the director server may instruct the client A to display a plurality of options, which may include a plurality of shooting position information, a plurality of target content information, a plurality of target part information, and so on, so that the user may choose according to a viewing need for the current live-streaming event. In response to a single-choice or a multi-choice of the user for the plurality of options, the client A may generate a custom configuration information and upload the custom configuration information to the director server. Alternatively, the director server may instruct the client A to display a prompt information for prompting the user to actively enter viewing preferences for the current live-streaming event. The client A may generate a custom configuration information according to a user input and upload the custom configuration information to the director server.

In operation S232, it is determined whether the custom configuration information is successfully received. If yes, operation S233 is performed. If not, operation S235 is performed.

Exemplarily, the above process of determining whether the custom configuration information is successfully received may include, for example, determining whether the custom configuration information is received within a predetermined period of time.

In operation S233, according to the custom configuration information, it is determined whether the client A has a configuration tag. If yes, operation S234 is performed. If not, operation S235 is performed.

According to embodiments of the present disclosure, whether the client A has a configuration tag may be determined by using the preset video tag library shown in FIG. 3A. For example, when the custom configuration information is obtained, a second similarity between the custom configuration information and each candidate video tag in the plurality of candidate video tags in the preset video tag library may be calculated. If a second similarity greater than a third threshold value exists, it is determined that the matching between the custom configuration information and the preset video tag library is successful, which indicates that the client A has a configuration tag. Otherwise, it is determined that the matching between the custom configuration information and the preset video tag library fails, which indicates that the client A has no configuration tag.

In operation S234, at least one candidate video tag is selected from the plurality of candidate video tags according to the second similarity as at least one configuration tag of the client A. Then, the at least one configuration tag of the client A may be used as the feature information of the client A.

In operation S235, a user attribute data and a user behavior data of the client A are acquired.

Exemplarily, the user attribute data may include, for example, a user gender, a user age, and so on. The user behavior data may include, for example, user history behavior data of watching live streaming, and user behavior data for live-streaming events, such as likes, gifts, favorites, tips, and so on.

In operation S236, a user category for the client A is determined according to the user attribute data and the user behavior data.

Exemplarily, a user profile may be constructed based on the user attribute data and the user behavior data, so as to determine the user category of the user. User categories may be divided from one or more dimensions, such as age group, geographic region, vertical industry, perspective selection, or the like. It may be understood that users belonging to a same user category generally have same or similar preferences for watching live streaming.

In operation S237, at least one user tag of the client is determined according to the user category for the client A. Then, the at least one user tag of the client A may be used as the feature information of the client A.

According to embodiments of the present disclosure, as shown in FIG. 3A, the director server 330 may further preset a user tag library 332, which may include at least one candidate user tag associated with each user category in the above-mentioned plurality of user categories. For example, a first user category includes at least one candidate user tag, a second user category includes at least one candidate user tag, and so on. The above-mentioned process of determining at least one user tag of the client A according to the user category for the client A may include: searching for at least one candidate user tag associated with the user category for the client from the user tag library as at least one user tag of the client.

It may be understood that according to the above-mentioned operation S231 to operation S234, the feature information of the client is determined preferentially according to the custom configuration information independently set by the user, so that the user preference for watching live streaming of the client may be determined directly and accurately. If no custom configuration information is received or the custom configuration information fails to match successfully, according to the above-mentioned operation S235 to operation S237, a user profile may be determined according to historically accumulated user attribute data and user behavior data, so as to determine a user tag associated with the user profile as the feature information of the client. In other examples, the above-mentioned two methods of obtaining the user tag may be performed simultaneously, and the obtained user tags may jointly represent the feature information of the client.

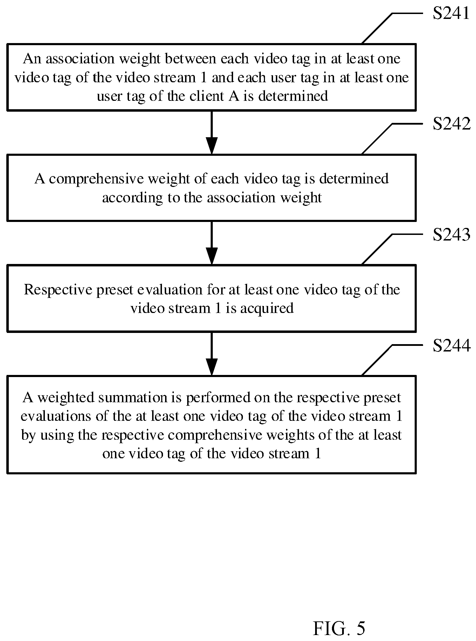

FIG. 5 schematically shows an example flowchart of a method of processing a video stream according to other embodiments of the present disclosure, which is used to exemplarily describe embodiments of operation S240 of match the respective feature information of the plurality of video streams with the feature information of the client.

As shown in FIG. 5, taking the client A and the video stream 1 as examples, the process of matching the respective feature information of the plurality of video streams with the feature information of the client A in operation S240 may include operation S241 to operation S244.

In operation S241, an association weight between each video tag in at least one video tag of the video stream 1 and each user tag in at least one user tag of the client A is determined.

According to embodiments of the present disclosure, as shown in FIG. 3A, the director server 330 may further preset a tag association library 333. The tag association library 333 may include an association weight between any video tag in a plurality of video tags and any user tag in a plurality of user tags. In operation S241, an association weight between each video tag and each user tag of the client A may be obtained according to the tag association library.

For example, a video stream includes a video tag "hotpot", which may be expressed as z₁=10001, where "z₁" is a unique identifier of a video category "food", and a value "10001" indicates that a shot target content of the video stream is "hotpot". The client A includes user tags "female" and "Sichuan Province", which may be expressed as z₂=001 and z₃=0101, respectively, where "z₂" is a unique identifier for "gender", "z₃" is a unique identifier for "geographic region", a value "001" indicates that a user of the client is "female", and a value "0101" indicates that the geographic region of the user of the client is "Sichuan Province". According to embodiments of the present disclosure, the tag association library includes a plurality of video categories (e.g., games, food, animation, etc.), each video category includes a plurality of video tags (for example, the food category includes a video tag "hotpot"), and each video tag has a corresponding association weight with a plurality of user tags respectively. Taking the video tag "hotpot" as an example, the association weight between the video tag "hotpot" and the user tag "female" is a, and the association weight between the video tag "hotpot" and the user tag "Sichuan Province" is b. The association weight between the video tag "hotpot" and the user tag "female" is used to indicate a preference of female users for live streaming of hotpot in a statistical sense, and the association weight between the video tag "hotpot" and the user tag "Sichuan Province" is used to indicate a preference of users in Sichuan Province for live streaming of hotpot in a statistical sense.

In operation S242, a comprehensive weight of each video tag is determined according to the association weight.

According to embodiments of the present disclosure, each user tag of the client A may have a user weight, indicating a degree of association between the user tag and the client A. For example, the user weight of the user tag "female" is α, and the user weight of the user tag "Sichuan Province" is β. A weighted summation may be performed on the association weight a and the association weight b by using α and β, so as to obtain the comprehensive weight of the video tag "hotpot".

In operation S243, respective preset evaluation for at least one video tag of the video stream 1 is acquired.

For example, the preset evaluation for the video tag "hotpot" of the video stream 1 may be γ, which is used to indicate a degree of association between the video tag "hotpot" and the video stream 1.

In operation S244, a weighted summation is performed on the respective preset evaluations of the at least one video tag of the video stream 1 by using the respective comprehensive weights of the at least one video tag of the video stream 1, so as to obtain the matching degree of the video stream 1 with respect to the client A.

Similarly, according to the above-mentioned embodiments, the matching degree of each other video stream with respect to the client A may be obtained, so that the video stream most suitable for the client A may be determined from the N video streams according to the matching degree. The process of processing the video stream for other clients is the same, and will not be repeated here. In the above matching process, the association relationship between each video tag of the video stream and each user tag of the client in each feature dimension is fully integrated, so that the calculated matching degree may reflect the degree of adaptation between the client and the video stream accurately, comprehensively and comprehensively, and a more suitable video stream may be selected for the client to push. In the example shown in FIG. 3A, according to the video stream processing scheme of embodiments of the present disclosure, the director server 330 may select a video stream i from video stream 1 to video stream N and push the video stream i to the first client 311, and the director server 330 may select a video stream j from video stream 1 to video stream N and push the video stream j to the second client 312, so that a personalized push of video streams for different clients is achieved, where i and j are integers greater than or equal to 1 and less than or equal to N, and i and j may be the same or different. In the above process, a weighted calculation of the feature weight of the video stream may be performed by using a semi-supervised linear machine learning method, so as to determine the matching degree between the video stream and the client. It may be understood that the matching degree may also be calculated using other machine learning algorithms, which is not limited here.

Furthermore, considering that the live-streaming demand of the client may change over time, for example, the user may experience a visual fatigue for a video stream, the user may need to change a viewing angle to check an overall game progress during a live streaming of game, or the like, embodiments of the present disclosure further provide a process of switching a video stream push. In a case, a valid duration may be set for the video tag of each video stream, or a valid duration may be set for the user tag of each client. Taking the client A as an example, after the video stream 1 is pushed to the client A, when the valid duration for the video tag of the video stream is reached, or when the valid duration for the user tag of the client A is reached, it is needed to re-determine the video tag of each video stream and the user tag of the client A, and re-perform the process of matching and selection. The process of obtaining the video tag, the process of obtaining the user tag, and the process of matching and selection have been described in detail above, and will not be repeated here. In another case, a switching duration may be directly set, and it is needed to re-perform the above process of processing the video stream when the switching duration is reached. In yet another case, it may be monitored, through a predetermined interface of the client, whether the user performs a predetermined trigger operation. If so, it is determined that the user wants to switch the video stream, and the process of processing the video stream may be re-performed according to the embodiments described above.

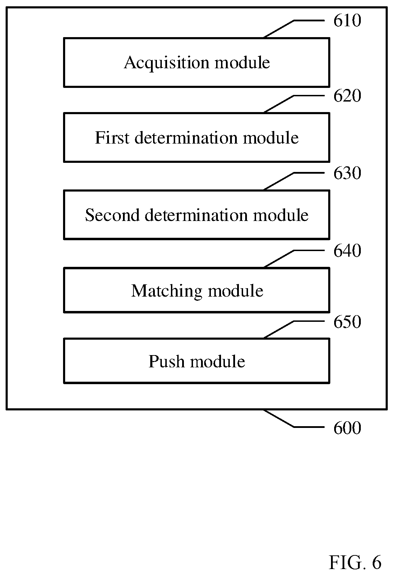

FIG. 6 schematically shows a block diagram of an apparatus of processing a video stream according to embodiments of the present disclosure.

As shown in FIG. 6, an apparatus 600 of processing a video stream may include an acquisition module 610, a first determination module 620, a second determination module 630, a matching module 640, and a push module 650.

The acquisition module 610 may be used to acquire a plurality of video streams for a live-streaming event.

The first determination module 620 may be used to determine respective feature information of the plurality of video streams.

The second determination module 630 may be used to determine a feature information of a client in response to a video request message from the client.

The matching module 640 may be used to match the respective feature information of the plurality of video streams with the feature information of the client respectively, so as to obtain respective matching degrees of the plurality of video streams with respect to the client.

The push module 650 may be used to select one video stream from the plurality of video streams to obtain a selected video stream according to the respective matching degrees of the plurality of video streams with respect to the client, and push the selected video stream to the client.

It should be noted that implementation modes, to-be-solved technical problems, achieved functions, and produced technical effects of the modules/units/sub-units in embodiments of the apparatus are the same as or similar to those of the corresponding steps in embodiments of the method, which will not be repeated here.

Any number of the modules, sub-modules, units and sub-units according to embodiments of the present disclosure, or at least part of functions of any number of them may be implemented in one module. Any one or more of the modules, sub-modules, units and sub-units according to embodiments of the present disclosure may be split into a plurality of modules for implementation. Any one or more of the modules, sub-modules, units and sub-units according to embodiments of the present disclosure may be implemented at least partially as a hardware circuit, such as a field programmable gate array (FPGA), a programmable logic array (PLA), a system on a chip, a system on a substrate, a system on a package, an Application Specific Integrated Circuit (ASIC), or may be implemented by hardware or firmware in any other reasonable manner of integrating or encapsulating the circuit, or may be implemented by any one of three implementation modes of software, hardware and firmware or an appropriate combination thereof. Alternatively, one or more of the modules, sub-modules, units and sub-units according to embodiments of the present disclosure may be at least partially implemented as a computer program module that, when executed, performs the corresponding functions.

For example, any number of the acquisition module 610, the first determination module 620, the second determination module 630, the matching module 640, and the push module 650 may be combined into one module for implementation, or any one of the modules may be divided into a plurality of modules. Alternatively, at least part of the functions of one or more of these modules may be combined with at least part of the functions of other modules and implemented in one module. According to embodiments of the present disclosure, at least one of the acquisition module 610, the first determination module 620, the second determination module 630, the matching module 640, and the push module 650 may be implemented at least partially as a hardware circuit, such as a field programmable gate array (FPGA), a programmable logic array (PLA), a system on a chip, a system on a substrate, a system on a package, an Application Specific Integrated Circuit (ASIC), or may be implemented by hardware or firmware in any other reasonable manner of integrating or encapsulating the circuit, or may be implemented by any one of the three implementation modes of software, hardware and firmware or an appropriate combination thereof. Alternatively, at least one of the acquisition module 610, the first determination module 620, the second determination module 630, the matching module 640, and the push module 650 may be at least partially implemented as a computer program module that may perform corresponding functions when executed.

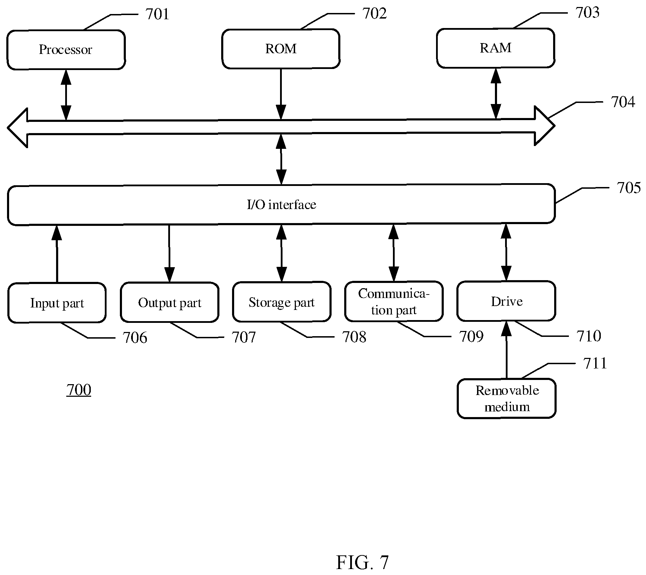

FIG. 7 schematically shows a block diagram of a computer device for implementing the methods described above according to embodiments of the present disclosure. The computer device shown in FIG. 7 is merely an example, and should not bring any limitation to the function and scope of use of embodiments of the present disclosure.

As shown in FIG. 7, a computer device 700 according to embodiments of the present disclosure includes a processor 701, which may execute various appropriate actions and processing according to the program stored in a read only memory (ROM) 702 or the program loaded into a random access memory (RAM) 703 from a storage part 708. The processor 701 may, for example, include a general-purpose microprocessor (for example, CPU), an instruction set processor and/or a related chipset and/or a special-purpose microprocessor (for example, an application specific integrated circuit (ASIC)), and the like. The processor 701 may further include an on-board memory for caching purposes. The processor 701 may include a single processing unit or multiple processing units for executing different actions of the method flow according to embodiments of the present disclosure.

Various programs and data required for the operation of the device 700 are stored in the RAM 703. The processor 701, the ROM 702 and the RAM 703 are connected to each other through a bus 704. The processor 701 executes various operations of the method flow according to embodiments of the present disclosure by executing the programs in the ROM 702 and/or the RAM 703. It should be noted that the program may also be stored in one or more memories other than the ROM 702 and the RAM 703. The processor 701 may also execute various operations of the method flow according to embodiments of the present disclosure by executing the programs stored in the one or more memories.

According to embodiments of the present disclosure, the device 700 may further include an input/output (I/O) interface 705 which is also connected to the bus 704. The device 700 may further include one or more of the following components connected to the I/O interface 705: an input part 706 including a keyboard, a mouse, etc.; an output part 707 including a cathode ray tube (CRT), a liquid crystal display (LCD), etc. and a speaker, etc.; a storage part 708 including a hard disk, etc.; and a communication part 709 including a network interface card such as a LAN card, a modem, and the like. The communication part 709 performs communication processing via a network such as the Internet. A drive 710 is also connected to the I/O interface 705 as required. A removable medium 911, such as a magnetic disk, an optical disk, a magneto-optical disk, a semiconductor memory, and the like, is installed on the drive 710 as required, so that the computer program read therefrom is installed into the storage part 708 as needed.

The method flow according to embodiments of the present disclosure may be implemented as a computer software program. For example, embodiments of the present disclosure include a computer program product including a computer program carried on a computer-readable storage medium. The computer program includes a program code for execution of the method shown in the flowchart. In such embodiments, the computer program may be downloaded and installed from the network through the communication part 709, and/or installed from the removable medium 711. When the computer program is executed by the processor 701, the above-mentioned functions defined in the system of embodiments of the present disclosure are performed. According to embodiments of the present disclosure, the above-described systems, apparatuses, devices, modules, units, etc. may be implemented by computer program modules.

The present disclosure further provides a computer-readable storage medium, which may be included in the apparatus/device/system described in the above embodiments; or exist alone without being assembled into the apparatus/device/system. The above-mentioned computer-readable storage medium carries one or more programs that when executed, perform the method according to embodiments of the present disclosure.

According to embodiments of the present disclosure, the computer-readable storage medium may be a non-transitory computer-readable storage medium, for example, may include but not limited to: a portable computer disk, a hard disk, a random access memory (RAM), a read-only memory (ROM), an erasable programmable read-only memory (EPROM or flash memory), a portable compact disk read-only memory (CD-ROM), an optical storage device, a magnetic storage device, or any suitable combination of the above. In the present disclosure, the computer-readable storage medium may be any tangible medium that contains or stores programs that may be used by or in combination with an instruction execution system, apparatus or device. For example, according to embodiments of the present disclosure, the computer-readable storage medium may include the above-mentioned ROM 702 and/or RAM 703 and/or one or more memories other than the ROM 702 and RAM 703.

The flowcharts and block diagrams in the accompanying drawings illustrate the possible architecture, functions, and operations of the system, method, and computer program product according to various embodiments of the present disclosure. In this regard, each block in the flowcharts or block diagrams may represent a part of a module, program segment, or code, which part includes one or more executable instructions for implementing the specified logical function. It should also be noted that, in some alternative implementations, the functions noted in the blocks may also occur in a different order than that noted in the accompanying drawings. For example, two blocks shown in succession may actually be executed substantially in parallel, or they may sometimes be executed in the reverse order, depending on the functions involved. It should also be noted that each block in the block diagrams or flowcharts, and the combination of blocks in the block diagrams or flowcharts, may be implemented by a dedicated hardware-based system that performs the specified functions or operations, or may be implemented by a combination of dedicated hardware and computer instructions.

## Claims

1. A method of processing a video stream, comprising:
acquiring (S210) a plurality of video streams for a live-streaming event;
determining (S220) respective feature information of the plurality of video streams, wherein the respective feature information of the plurality of video streams comprises at least one video tag;
determining (S230) a feature information of a client in response to a video request message from the client, wherein the feature information of the client comprises at least one user tag of the client, and the at least one user tag of the client is used to indicate a user category for the client;
matching (S240), according to an association weight between each video tag of each video stream and each user tag in at least one user tag of the client, the respective feature information of the plurality of video streams with the feature information of the client respectively, so as to obtain respective matching degrees of the plurality of video streams with respect to the client, wherein the association weight indicates a degree of association between the video tag and the user tag; and
selecting (S250) one video stream from the plurality of video streams to obtain a selected video stream according to the respective matching degrees of the plurality of video streams with respect to the client, and pushing the selected video stream to the client,
wherein matching (S240), according to the association weight between each video tag of each video stream and each user tag in at least one user tag of the client, the respective feature information of the plurality of video streams with the feature information of the client respectively comprises:
by taking each video tag of each video stream and each user tag in at least one user tag of the client as an index, determining, from a tag association library, the association weight between each video tag of each video stream and each user tag in at least one user tag of the client, wherein the tag association library is preset and comprises an association weight between a video tag in a plurality of video tags and a user tag in a plurality of user tags;
determining a comprehensive weight of each video tag of each video stream according to the association weight and a user weight of each user tag, wherein the user weight indicates a degree of association between the user tag and the client;
acquiring a preset evaluation for each video tag of each video stream, wherein the preset evaluation is used to indicate a degree of association between the video tag and the corresponding video stream; and
performing a weighted summation on the preset evaluation for each video tag of each video stream by using the comprehensive weight of each video tag of each video stream respectively, so as to obtain a result for the performing a weighted summation as the matching degree of each video stream with respect to the client,
wherein the at least one user tag comprises a first user tag and a second user tag, the user weight of the first user tag is α, the user weight of the second user tag is β, the association weight between the video tag and the first user tag is a, the association weight between the video tag and the second user tag is b, and the determining a comprehensive weight of each video tag of each video stream according to the association weight and a user weight of each user tag comprises: performing a weighted summation on a and b by using α and β, so as to obtain the comprehensive weight of the video tag,
wherein the determining respective feature information of the plurality of video streams comprises:
acquiring a shooting position information (342) of each video stream in the plurality of video streams; and
determining a first video tag of each video stream according to the shooting position information (342),
wherein the determining a feature information of the client comprises:
acquiring (S235) user attribute data and user behavior data of the client;
determining (S236) a user category for the client according to the user attribute data and the user behavior data; and
determining (S237) at least one user tag of the client according to the user category,
wherein the method further comprises: presetting a user tag library (332), wherein the user tag library (332) comprises at least one candidate user tag associated with each user category in a plurality of user categories;
wherein the determining (S237) at least one user tag of the client according to the user category comprises: searching for at least one candidate user tag associated with the user category from the user tag library as the at least one user tag.

2. The method according to claim 1, wherein the determining respective feature information of the plurality of video streams further comprises:
extracting at least one frame image (3411) from each video stream;
determining a content information (3412) of the video stream according to the at least one frame image; and
determining a second video tag of each video stream according to the content information (3412).

3. The method according to claim 2, wherein the determining a second video tag of each video stream according to the content information comprises:
calculating a first similarity between the content information and each candidate video tag in a plurality of candidate video tags; and
selecting, according to the first similarity, at least one candidate video tag from the plurality of candidate video tags as the second video tag of the video stream.

4. The method according to claim 1, wherein the selecting (S250) one video stream from the plurality of video streams to obtain a selected video stream according to the respective matching degrees of the plurality of video streams with respect to the client, and pushing the selected video stream to the client comprises:
pushing, in response to a matching degree in the respective matching degrees of the plurality of video streams with respect to the client being greater than a predetermined threshold value, a video stream having a greatest matching degree in the plurality of video streams to the client.

5. A computer device, comprising:
a memory having computer instructions therein; and
at least one processor, wherein the at least one processor is configured to execute the computer instructions to implement the method according to any one of claims 1 to 4.

6. A computer-readable storage medium having computer instructions therein, wherein the computer instructions are executable by a processor to implement the method according to any one of claims 1 to 4.

## Patentansprüche

1. Verfahren zum Verarbeiten eines Videostroms, das folgende Schritte aufweist:
Erfassen (S210) einer Mehrzahl von Videoströmen für ein Live-Streaming-Ereignis;
Bestimmen (S220) jeweiliger Merkmalsinformationen der Mehrzahl von Videoströmen, wobei die jeweiligen Merkmalsinformationen der Mehrzahl von Videoströmen zumindest ein Video-Tag aufweisen;
Bestimmen (S230) einer Merkmalsinformation eines Kunden ansprechend auf eine Videoanforderungsnachricht von dem Kunden, wobei die Merkmalsinformation des Kunden zumindest ein Benutzer-Tag des Kunden aufweist und das zumindest eine Benutzer-Tag des Kunden verwendet wird, um eine Benutzerkategorie für den Kunden anzugeben;
Abgleichen (S240), gemäß einer Zuordnungsgewichtung zwischen jedem Video-Tag jedes Videostroms und jedem Benutzer-Tag in zumindest einem Benutzer-Tag des Kunden, der jeweiligen Merkmalsinformationen der Mehrzahl von Videoströmen jeweils mit den Merkmalsinformationen des Kunden, um jeweilige Übereinstimmungsgrade der Mehrzahl von Videoströmen in Bezug auf den Kunden zu erhalten, wobei die Zuordnungsgewichtung einen Zuordnungsgrad zwischen dem Video-Tag und dem Benutzer-Tag angibt; und
Auswählen (S250) eines Videostroms aus der Mehrzahl von Videoströmen, um einen ausgewählten Videostrom zu erhalten, gemäß den jeweiligen Übereinstimmungsgraden der Mehrzahl von Videoströmen in Bezug auf den Kunden, und Schieben des ausgewählten Videostroms zu dem Kunden,
wobei das Abgleichen (S240), gemäß der Zuordnungsgewichtung zwischen jedem Video-Tag jedes Videostroms und jedem Benutzer-Tag in zumindest einem Benutzer-Tag des Kunden, der jeweiligen Merkmalsinformationen der Mehrzahl von Videoströmen jeweils mit den Merkmalsinformationen des Kunden folgende Schritte aufweist:
durch Nehmen jedes Video-Tags jedes Videostroms und jedes Benutzer-Tags in zumindest einem Benutzer-Tag des Kunden als einen Index, Bestimmen, aus einer Tag-Zuordnungsbibliothek, der Zuordnungsgewichtung zwischen jedem Video-Tag jedes Videostroms und jedem Benutzer-Tag in zumindest einem Benutzer-Tag des Kunden, wobei die Tag-Zuordnungsbibliothek voreingestellt ist und eine Zuordnungsgewichtung zwischen einem Video-Tag in einer Mehrzahl von Video-Tags und einem Benutzer-Tag in einer Mehrzahl von Benutzer-Tags aufweist;
Bestimmen einer umfassenden Gewichtung jedes Video-Tags jedes Videostroms gemäß der Zuordnungsgewichtung und einer Benutzergewichtung jedes Benutzer-Tags, wobei die Benutzergewichtung einen Zuordnungsgrad zwischen dem Benutzer-Tag und dem Kunden angibt;
Erfassen einer voreingestellten Bewertung für jedes Video-Tag jedes Videostroms, wobei die voreingestellte Bewertung verwendet wird, um einen Zuordnungsgrad zwischen dem Video-Tag und dem entsprechenden Videostrom anzugeben; und
Durchführen einer gewichteten Summierung an der voreingestellten Bewertung für jedes Video-Tag jedes Videostroms durch jeweiliges Verwenden der umfassenden Gewichtung jedes Video-Tags jedes Videostroms, um ein Ergebnis für das Durchführen einer gewichteten Summierung als den Übereinstimmungsgrad jedes Videostroms in Bezug auf den Kunden zu erhalten,
wobei das zumindest eine Benutzer-Tag ein erstes Benutzer-Tag und ein zweites Benutzer-Tag aufweist, die Benutzergewichtung des ersten Benutzer-Tags α ist, die Benutzergewichtung des zweiten Benutzer-Tags β ist, die Zuordnungsgewichtung zwischen dem Video-Tag und dem ersten Benutzer-Tag a ist, die Zuordnungsgewichtung zwischen dem Video-Tag und dem zweiten Benutzer-Tag b ist, und das Bestimmen einer umfassenden Gewichtung jedes Video-Tags jedes Videostroms gemäß der Zuordnungsgewichtung und einer Benutzergewichtung jedes Benutzer-Tags Folgendes aufweist: Durchführen einer gewichteten Summierung an a und b unter Verwendung von α und β, um die umfassende Gewichtung des Video-Tags zu erhalten,
wobei das Bestimmen jeweiliger Merkmalsinformationen der Mehrzahl von Videoströmen folgende Schritte aufweist:
Erfassen einer Aufnahmepositionsinformation (342) jedes Videostroms in der Mehrzahl von Videoströmen; und
Bestimmen eines ersten Video-Tags jedes Videostroms gemäß der Aufnahmepositionsinformation (342),
wobei das Bestimmen einer Merkmalsinformation des Kunden folgende Schritte aufweist:
Erfassen (S235) von Benutzerattributdaten und Benutzerverhaltensdaten des Kunden;
Bestimmen (S236) einer Benutzerkategorie für den Kunden gemäß den Benutzerattributdaten und den Benutzerverhaltensdaten; und
Bestimmen (S237) zumindest eines Benutzer-Tags des Kunden gemäß der Benutzerkategorie,
wobei das Verfahren ferner Folgendes aufweist: Voreinstellen einer Benutzer-Tag-Bibliothek (332), wobei die Benutzer-Tag-Bibliothek (332) zumindest ein Kandidaten-Benutzer-Tag aufweist, das jeder Benutzerkategorie in einer Vielzahl von Benutzerkategorien zugeordnet ist;
wobei das Bestimmen (S237) zumindest eines Benutzer-Tags des Kunden gemäß der Benutzerkategorie Folgendes aufweist: Suchen nach zumindest einem Kandidaten-Benutzer-Tag, das der Benutzerkategorie zugeordnet ist, aus der Benutzer-Tag-Bibliothek als das zumindest eine Benutzer-Tag.

2. Verfahren gemäß Anspruch 1, bei dem das Bestimmen jeweiliger Merkmalsinformationen der Mehrzahl von Videoströmen ferner folgende Schritte aufweist:
Extrahieren (3411) zumindest eines Einzelbildes aus jedem Videostrom;
Bestimmen (3412) einer Inhaltsinformation des Videostroms gemäß dem zumindest einen Einzelbild; und
Bestimmen (3412) eines zweiten Video-Tags jedes Videostroms gemäß der Inhaltsinformation.

3. Verfahren gemäß Anspruch 2, bei dem das Bestimmen eines zweiten Video-Tags jedes Videostroms gemäß der Inhaltsinformation folgende Schritte aufweist:
Berechnen einer ersten Ähnlichkeit zwischen den Inhaltsinformationen und jedem Kandidaten-Video-Tag in einer Vielzahl von Kandidaten-Video-Tags; und
Auswählen, gemäß der ersten Ähnlichkeit, zumindest eines Kandidaten-Video-Tags aus der Mehrzahl von Kandidaten-Video-Tags als das zweite Video-Tag des Videostroms.

4. Verfahren gemäß Anspruch 1, bei dem das Auswählen (S250) eines Videostroms aus der Mehrzahl von Videoströmen, um einen ausgewählten Videostrom gemäß den jeweiligen Übereinstimmungsgraden der Mehrzahl von Videoströmen in Bezug auf den Kunden zu erhalten, und Schieben des ausgewählten Videostroms zu dem Kunden folgenden Schritt aufweist:
Schieben, ansprechend darauf, dass ein Übereinstimmungsgrad in den jeweiligen Übereinstimmungsgraden der Mehrzahl von Videoströmen in Bezug auf den Kunden größer als ein vorbestimmter Schwellenwert ist, eines Videostroms mit einem größten Übereinstimmungsgrad in der Mehrzahl von Videoströmen zu dem Kunden.

5. Computervorrichtung, die folgende Merkmale aufweist:
einen Speicher mit Computeranweisungen in demselben; und
zumindest einen Prozessor, wobei der zumindest eine Prozessor dazu konfiguriert ist, die Computeranweisungen auszuführen, um das Verfahren gemäß einem der Ansprüche 1 bis 4 zu implementieren.

6. Computerlesbares Speichermedium mit Computeranweisungen in demselben, wobei die Computeranweisungen durch einen Prozessor ausführbar sind, um das Verfahren gemäß einem der Ansprüche 1 bis 4 zu implementieren.

## Revendications

1. Procédé de traitement d'un flux vidéo, comprenant le fait de :
acquérir (S210) une pluralité de flux vidéo pour un événement de diffusion continue en direct ;
déterminer (S220) des informations caractéristiques respectives de la pluralité de flux vidéo, dans lequel les informations caractéristiques respectives de la pluralité de flux vidéo comprennent au moins une balise vidéo ;
déterminer (S230) une information caractéristique d'un client en réponse à un message de demande de vidéo provenant du client, dans lequel l'information caractéristique du client comprend au moins une balise utilisateur du client, et la au moins une balise utilisateur du client est utilisée pour indiquer une catégorie d'utilisateur pour le client ;
mettre en correspondance (S240), en fonction d'un poids d'association entre chaque balise vidéo de chaque flux vidéo et chaque balise utilisateur dans au moins une balise utilisateur du client, les informations caractéristiques respectives de la pluralité de flux vidéo avec l'information caractéristique du client respectivement, de manière à obtenir des degrés de correspondance respectifs de la pluralité de flux vidéo par rapport au client, dans lequel le poids d'association indique un degré d'association entre la balise vidéo et la balise utilisateur ; et
sélectionner (S250) un flux vidéo parmi la pluralité de flux vidéo pour obtenir un flux vidéo sélectionné en fonction des degrés de correspondance respectifs de la pluralité de flux vidéo par rapport au client, et pousser le flux vidéo sélectionné vers le client,
dans lequel la mise en correspondance (S240), en fonction du poids d'association entre chaque balise vidéo de chaque flux vidéo et chaque balise utilisateur dans au moins une balise utilisateur du client, des informations caractéristiques respectives de la pluralité de flux vidéo avec l'information caractéristique du client respectivement comprend le fait de :
en prenant comme indice chaque balise vidéo de chaque flux vidéo et chaque balise utilisateur dans au moins une balise utilisateur du client, déterminer, à partir d'une bibliothèque d'association de balises, le poids d'association entre chaque balise vidéo de chaque flux vidéo et chaque balise utilisateur dans au moins une balise utilisateur du client, dans lequel la bibliothèque d'association de balises est prédéfinie et comprend un poids d'association entre une balise vidéo d'une pluralité de balises vidéo et une balise utilisateur d'une pluralité de balises utilisateur ;
déterminer un poids global de chaque balise vidéo de chaque flux vidéo en fonction du poids d'association et d'un poids d'utilisateur de chaque balise utilisateur, dans lequel le poids d'utilisateur indique un degré d'association entre la balise utilisateur et le client ;
acquérir une évaluation prédéfinie pour chaque balise vidéo de chaque flux vidéo, dans lequel l'évaluation prédéfinie est utilisée pour indiquer un degré d'association entre la balise vidéo et le flux vidéo correspondant ; et
effectuer une somme pondérée sur l'évaluation prédéfinie pour chaque balise vidéo de chaque flux vidéo en utilisant le poids global de chaque balise vidéo de chaque flux vidéo respectivement, de manière à obtenir un résultat pour la réalisation d'une somme pondérée en tant que degré de correspondance de chaque flux vidéo par rapport au client,
dans lequel la au moins une balise utilisateur comprend une première balise utilisateur et une seconde balise utilisateur, le poids d'utilisateur de la première balise utilisateur est α, le poids d'utilisateur de la seconde balise utilisateur est ß, le poids d'association entre la balise vidéo et la première balise utilisateur est a, le poids d'association entre la balise vidéo et la seconde balise utilisateur est b, et la détermination d'un poids global de chaque balise vidéo de chaque flux vidéo en fonction du poids d'association et d'un poids d'utilisateur de chaque balise utilisateur comprend le fait de : effectuer une somme pondérée sur a et b en utilisant α et ß, de manière à obtenir le poids global de la balise vidéo,
dans lequel la détermination d'informations caractéristiques respectives de la pluralité de flux vidéo comprend le fait de :
acquérir une information de position de prise (342) de chaque flux vidéo de la pluralité de flux vidéo ; et
déterminer une première balise vidéo de chaque flux vidéo en fonction de l'information de position de prise (342),
dans lequel la détermination d'une information caractéristique du client comprend le fait de :
acquérir (S235) des données d'attribut utilisateur et des données de comportement utilisateur du client ;
déterminer (S236) d'une catégorie d'utilisateur pour le client en fonction des données d'attribut utilisateur et des données de comportement utilisateur ; et
déterminer (S237) au moins une balise utilisateur du client en fonction de la catégorie d'utilisateur,
dans lequel le procédé comprend en outre le fait de : prédéfinir une bibliothèque de balises utilisateur (332), dans lequel la bibliothèque de balises utilisateur (332) comprend au moins une balise utilisateur candidate associée à chaque catégorie d'utilisateur d'une pluralité de catégories d'utilisateur ;
dans lequel la détermination (S237) d'au moins une balise utilisateur du client en fonction de la catégorie d'utilisateur comprend le fait de : rechercher au moins une balise utilisateur candidate associée à la catégorie d'utilisateur dans la bibliothèque de balises utilisateur en tant que la au moins une balise utilisateur.

2. Procédé selon la revendication 1, dans lequel la détermination d'informations caractéristiques respectives de la pluralité de flux vidéo comprend en outre le fait de :
extraire au moins une image de trame (3411) de chaque flux vidéo ;
déterminer une information de contenu (3412) du flux vidéo en fonction de la au moins une image de trame ; et
déterminer une seconde balise vidéo de chaque flux vidéo en fonction de l'information de contenu (3412).

3. Procédé selon la revendication 2, dans lequel la détermination d'une seconde balise vidéo de chaque flux vidéo en fonction de l'information de contenu comprend le fait de :
calculer une première similarité entre l'information de contenu et chaque balise vidéo candidate d'une pluralité de balises vidéo candidates ; et
sélectionner, en fonction de la première similarité, au moins une balise vidéo candidate parmi la pluralité de balises vidéo candidates en tant que seconde balise vidéo du flux vidéo.

4. Procédé selon la revendication 1, dans lequel la sélection (S250) d'un flux vidéo parmi la pluralité de flux vidéo pour obtenir un flux vidéo sélectionné en fonction des degrés de correspondance respectifs de la pluralité de flux vidéo par rapport au client, et la poussée du flux vidéo sélectionné vers le client comprennent le fait de :
pousser, en réponse au fait qu'un degré de correspondance des degrés de correspondance respectifs de la pluralité de flux vidéo par rapport au client soit supérieur à une valeur seuil prédéterminée, un flux vidéo présentant un degré de correspondance le plus élevée de la pluralité de flux vidéo vers le client.

5. Dispositif informatique, comprenant :
une mémoire contenant des instructions informatiques ; et
au moins un processeur, dans lequel le au moins un processeur est configuré pour exécuter les instructions informatiques pour mettre en œuvre le procédé selon l'une quelconque des revendications 1 à 4.

6. Support de stockage lisible par ordinateur contenant des instructions informatiques, dans lequel les instructions informatiques sont exécutables par un processeur pour mettre en œuvre le procédé selon l'une quelconque des revendications 1 à 4.
